Europäisches Patentamt

European Patent Office

Office européen des brevets

(19)

(11) Veröffentlichungsnummer: **0 048 419**
**B1**

(12) **EUROPÄISCHE PATENTSCHRIFT**

(45) Veröffentlichungstag der Patentschrift:
**15.02.84**

(21) Anmeldenummer: **81107221.4**

(22) Anmeldetag: **14.09.81**

(51) Int. Cl.³: **F 16 K 1/18,** F 16 K 15/03,
F 04 B 21/02

(54) **Klappenrückschlagventil.**

(30) Priorität: **22.09.80 DE 3035742**

(43) Veröffentlichungstag der Anmeldung:
**31.03.82 Patentblatt 82/13**

(45) Bekanntmachung des Hinweises auf die Patenterteilung:
**15.02.84 Patentblatt 84/7**

(84) Benannte Vertragsstaaten:
**AT BE CH DE FR GB IT LI LU NL SE**

(56) Entgegenhaltungen:
**DE - C - 194 201**
**FR - A - 370 421**
**US - A - 3 613 720**
**US - A - 3 814 124**

(73) Patentinhaber: **Henkel Kommanditgesellschaft auf Aktien, Postfach 1100 Henkelstrasse 67,
D-4000 Düsseldorf-Holthausen (DE)**

(72) Erfinder: **Stöffler, Albert, Nördlingerstrasse 28,
D-4000 Düsseldorf-Benrath (DE)**
Erfinder: **Mehl, Dietholf, Marschallstrasse 32,
D-4000 Düsseldorf 30 (DE)**
Erfinder: **Eckers, Lorenz, Staufenstrasse 6,
D-4050 Mönchengladbach 1 (DE)**

## Klappenrückschlagventil

Die Erfindung betrifft ein Klappenrückschlagventil mit einem durch Spritzgiessen hergestellten, als Ventilsitz dienenden Korpus mit kreiszylindrischer Ventilöffnung. Insbesondere bezieht sich die Erfindung auf ein solches Klappenventil als Bestandteil einer Membranpumpe, wobei der Korpus aus elastischem Material bestehen und einen Teil des zusammenzudrückenden Pumpenraums bilden kann.

Solche Membranpumpen finden vorteilhaft Anwendung in Spendern für viskose Produkte, wie Zahnpasta. Dabei kann der Spender aus einem eine Deckfläche aufweisenden, zylindrischen Behälter und einem mit dem Umfang dichtend an der Behälterinnenwandung anliegenden sowie beim durch den Atmosphärendruck bewirkten Vorschub die viskose Behälterfüllung gegen die Deckfläche drückenden Kolben bestehen, wobei die Membranpumpe aus einem Einlassventil in der Deckfläche, einem Auslassventil und einem zwischen den Ventilen verbleibenden, elastisch zusammenzudrückenden, bis auf die Ventile geschlossenen Pumpenraum aufgebaut sein kann.

Der die Ventilöffnung des Klappenventils enthaltende kreissymmetrische, elastische Korpus kann natürlich auf sehr verschiedene Weise, z.B. auch durch Pressen eines nach dem Pressen in dem gewünschten Masse elastisch zu verformenden Materials, hergestellt werden. Beim Pressen von Massenprodukten sind jedoch leichte Abweichungen von den Vorgabemassen nicht zu vermeiden, so dass ein gepresster, die Ventilöffnung kreissymmetrisch, z.B. glockenförmig, umgebender Korpus nur sehr bedingt homogen ist und enge Vorgabemasse nicht exakt ausfüllen kann. An sich können Bauteile aus Kunststoff mit hoher Genauigkeit und auch die inneren Spannungen betreffend mit erheblicher Homogenität durch Spritzgiessen automatisiert hergestellt werden. Für kreissymmetrische Körper gilt das aber nur, wenn das Spritzgiessen von einem Punkt der Symmetrieachse her erfolgt.

Da der sich an die Ventilöffnung kreissymmetrisch anschliessende Korpus des eingangs genannten Klappenventils überall weiter von der Symmetrieachse abliegt als der innere Umfang der Ventilöffnung selbst, kann der Anguss bei Spritzgiessen eigentlich nur im Bereich des Ventils selbst ansetzen. Als einziges Teil des Klappenventils berührt nur dessen Klappe die genannte Symmetrieachse. Von der Klappe aus aber kann das Spritzen nicht erfolgen, da dieses Bauteil normalerweise selbst unsymmetrisch ist, weil es nur einseitig, beispielsweise über ein Filmscharnier, mit dem übrigen Ventilkörper zu verbinden ist. Wenn also verlangt wird, den Spritzansatz an eine Stelle längs der Symmetrielinie des Korpus zu legen, kann diese Stelle sinnvoll nur im Bereich des engsten Umfangs des Korpus, also in der Ventilöffnung, liegen. Da jedoch vom Spritzgiessen stets eine mehr oder weniger grosse Angusswarze zurückbleibt, kann eine sichere Funktion des Klappenventils — selbst bei ausreichend gross verbleibendem restlichen Öffnungsquerschnitt — nicht mehr ohne weiteres vorausgesetzt werden, da die Klappe nicht mehr in allen Fällen, z.B. bei relativ dicker Angusswarze, im geforderten Masse dicht schliesst. Im Ergebnis war diesem möglichen Nachteil bisher nur zu begegnen, indem das Angussstück nach dem Giessen in einem besonderen Fertigungsschritt abgeschliffen oder ganz entfernt wurde.

Der Erfindung liegt die Aufgabe zugrunde, das Klappenventil eingangs genannter Art so auszubilden, dass es mit einem umgebenden, die Vorgabemasse exakt ausfüllenden, spannungshomogenen Korpus durch Spritzgiessen herzustellen ist, ohne dass ein besonderes Nachbearbeiten des Ausgussstücks erforderlich wäre. Die erfindungsgemässe Lösung ist gekennzeichnet durch eine die zylindrische Ventilöffnung diametral überbrückende Speiche mit in deren Zentrum liegender Angusswarze und eine Ventilklappe mit aus der Ebene ihres dichtend auf die Kante der Öffnung aufzuliegenden Randes von der Angusswarze weggewölbtem, insbesondere kugelkalottenartig gewölbtem, Mittelteil.

Erfindungsgemäss kann also die Ventilöffnung ohne jede Störung der Funktion des Klappenventils mit einer Speiche überbrückt werden, von deren auf der Symmetrieachse liegender Mitte aus das Spritzen des gesamten Körpers mit dem Ergebnis der gewünschten Spannungshomogenität und Formtreue auszuführen ist. Die Speiche kann so bemessen werden, dass sie den Öffnungsquerschnitt relativ wenig beeinträchtigt; gegebenenfalls kann die Öffnung auch insgesamt etwas grösser als bei nicht «überbrückten» Klappenventilen ausgebildet werden, so dass der vom Ventil aufzunehmende Durchfluss nicht störend beeinträchtigt wird. Auf jeden Fall bedarf das Ventil wegen der lediglich zum Giessen erforderlichen Speiche keiner Nachbearbeitung, da ein dichtes Schliessen des Ventils auch bei relativ grosser Angusswarze sichergestellt ist. Die erfindungsgemässe Wölbung der Ventilklappe gewährleistet nämlich einen stets ausreichenden Abstand gegenüber der Angusswarze, so dass der Rand der Ventilklappe mit Sicherheit glatt auf dem Rand der Ventilöffnung liegt.

Da die Ventilklappe selbst wegen ihrer einseitigen Befestigung notwendig unsymmetrisch in Bezug auf die genannte Symmetrieachse der Ventilöffnung mit dem anschliessenden Korpus ausgebildet ist, würde das gleichzeitige Herstellen der Ventilklappe beim Spritzgiessen von Ventilöffnung und Korpus zu Inhomogenitäten betreffend die Materialverteilung und die inneren Spannungen des Gusskörpers führen. Die zugehörigen Probleme werden gemäss weiterer Erfindung dadurch überwunden, dass der die Ventilöffnung enthaltende Korpus und die Ventilklappe, eventuell mit entsprechender Halterung, getrennt voneinander hergestellte Bauteile sind. Bei dem automatischen Herstellen des erfindungsgemässen Klappenventils und der damit gekoppelten Bauteile, z.B. einer Membranpumpe, können Einzelteile, insbesondere bei entsprechend aneinander angepasster Formgebung, wesentlich leichter zusammen montiert werden, als ein Nachbearbeiten einzelner Bauteile auszuführen wäre. Die Herstellung des erfindungsgemässen Klappenventils gestaltet sich also in einer automatischen Fertigungsphase relativ einfach, wenn die Ventilöffnung mit angrenzendem Korpus und die Ventilklappe getrennt gefertigt und dann zusammengesetzt werden.

Anhand der schematischen Darstellung von Ausführungsbeispielen werden weitere Einzelheiten der Erfindung erläutert. Es zeigen:

Fig. 1 einen Pastenspender im Längsschnitt mit einer ein Klappenventil erfindungsgemässer Art aufweisenden Membranpumpe; und

Fig. 2 eine vergrösserte Prinzipzeichnung des Klappenventils.

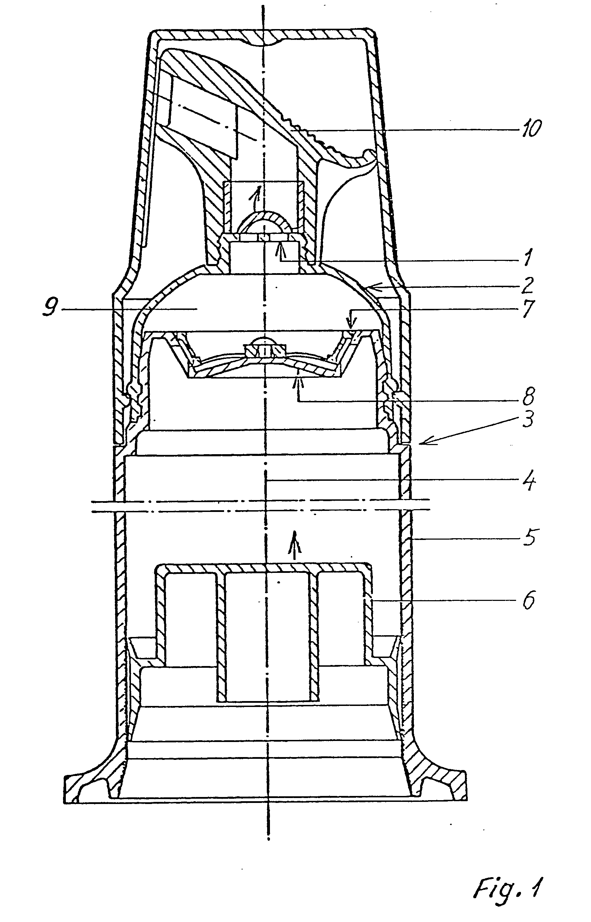

In dem Ausführungsbeispiel nach Fig. 1 ist ein insgesamt mit 1 bezeichnetes, erfindungsgemässes Klappenventil in eine insgesamt mit 2 bezeichnete Membranpumpe eines insgesamt mit 3 bezeichneten Spenders integriert. Das Klappenventil 1, die Membranpumpe 2 und der Spender 3 sind alle im wesentlichen kreissymmetrisch in Bezug auf die Längsachse 4 ausgebildet. Der Spender 3 besteht aus einem zylindrischen Behälter 5 mit darin dichtend zu verschiebendem Kolben 6 und einer integrierten, das Einlassventil 7 der Membranpumpe 2 enthaltenden Deckfläche 8, dem in Bezug auf den Pumpenraum 9 der Deckfläche 8 gegenüberliegenden Klappenventil 1 und einem Mundstück 10 zum Abgeben von im Behälter 5 enthaltenem viskosen Produkt, wie Zahnpasta.

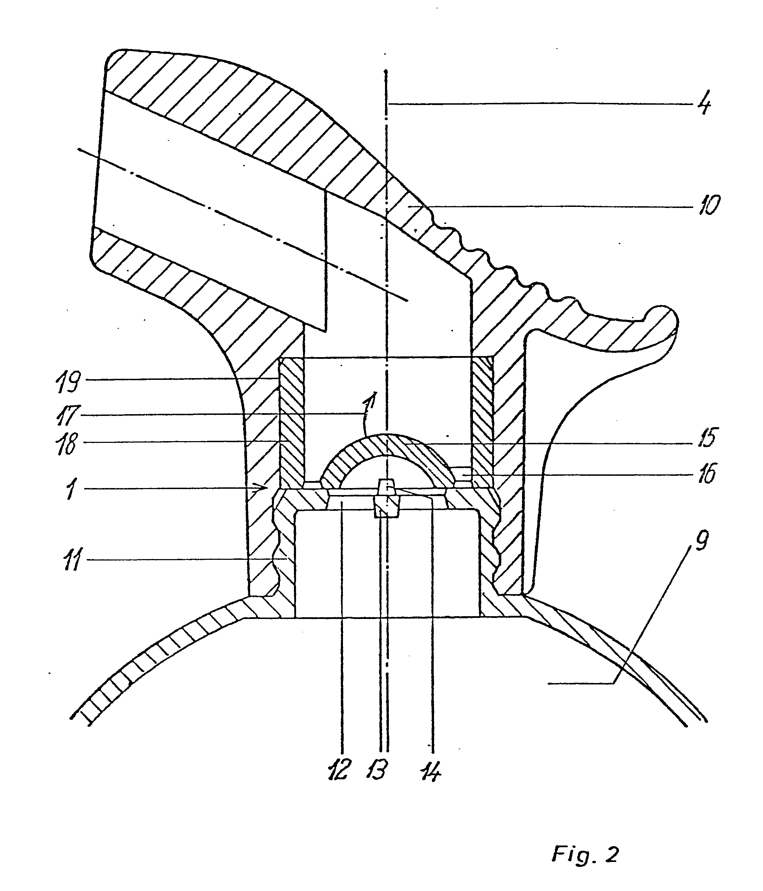

Das in Fig. 1 nur im Rahmen einer Gesamtvorrichtung angedeutete Klappenventil 1 ist in Fig. 2 schematisch vergrössert dargestellt. Das Klappenventil 1 befindet sich im Ausführungsbeispiel in einem symmetrisch in Bezug auf Längsachse 4 auf den Pumpenraum 9 aufgesetzten Hals 11 der Membranpumpe 2. Der Hals 11 besitzt am oberen, dem Mundstück 10 zugewandten Ende die Ventilöffnung 12. Diese ist wegen der erwünschten Kreissymmetrie vorzugsweise kreisförmig. Diametral durch die Ventilöffnung 12 erstreckt sich jedoch eine im Schnitt gezeichnete Speiche 13, deren Aufgabe es ist, als Angussstelle zum Spritzgiessen des gesamten unmittelbar mit der Ventilöffnung 12 zusammenhängenden Korpus des Klappenventils 1 bzw. der Membranpumpe 2 zu dienen.

An einer Angussstelle ist in der Regel das Verbleiben einer Angusswarze unvermeidlich. Eine solche auf der Speiche 13 verbleibende Angusswarze 14 würde ein einwandfreies Schliessen einer in Fig. 2 oben auf der Ventilöffnung 12 liegenden üblich ebenen Ventilklappe beeinträchtigen. Erfindungsgemäss ist daher eine, insbesondere kugelkalottenartig, gewölbte Ventilklappe 15 vorgesehen, welche um ein Filmscharnier 16 in Pfeilrichtung 17 zu schwenken ist. Unabhängig von der Grösse der Angusswarze 14 ist wegen der Wölbung der Ventilklappe 15 stets auf den ganzen Umfang der Ventilöffnung 12 ein glattes, dichtendes Aufliegen des Ventilklappenrandes sichergestellt.

Da die Ventilklappe 15 wegen des einseitigen Scharniers 16 von Natur aus nur unsymmetrisch in Bezug auf die Längsachse 4 herzustellen ist, würde das gleichzeitige Spritzen der Ventilklappe 15 mit den übrigen Teilen des Ventils die gewünschte Spannungs- und Formhomogenität eventuell stören. Gemäss weiterer Erfindung wird die Ventilklappe 15 daher getrennt und z.B. zusammen mit einem gesonderten Tragezylinder 18, mit dem sie über das Scharnier 16 verbunden ist, hergestellt. Vorzugsweise wird der Tragezylinder 18 so ausgebildet, dass er in eine entsprechende Ausnehmung 19 eines anschliessenden Körpers, z.B. des Mundstücks 10, ohne Schwierigkeiten, d.h. auch im automatischen Betrieb, einzuschieben und auf diese Weise problemlos von dem jeweiligen Automaten bei der Montage bzw. Konfektion in der vorgeschriebenen Weise der Ventilöffnung 12 zuzuordnen ist.

Bezugszeichenliste:
　1 = Klappenventil
　2 = Membranpumpe
　3 = Spender
　4 = Längsachse
　5 = Behälter
　6 = Kolben
　7 = Einlassventil
　8 = Deckfläche
　9 = Pumpenraum
　10 = Mundstück
　11 = Hals
　12 = Ventilöffnung
　13 = Speiche
　14 = Angusswarze
　15 = Ventilklappe
　16 = Scharnier
　17 = Pfeil
　18 = Tragzylinder
　19 = Ausnehmung

**Patentansprüche**

1. Klappenrückschlagventil (1) mit einem durch Spritzgiessen hergestellten, als Ventilsitz dienenden Korpus mit kreiszylindrischer Ventilöffnung (12), insbesondere als Bestandteil einer Membranpumpe (2), gekennzeichnet durch eine die Ventilöffnung (12) diametral überbrückende Speiche (13) mit in deren Zentrum liegender Angusswarze (14) und einer Ventilklappe (15) mit aus der Ebene ihres dichtend über die Kante der Öffnung (12) aufzulegenden Randes von der Angusswarze (14) weggewölbtem Mittelteil.

2. Klappenventil nach Anspruch 1, gekennzeichnet durch eine kugelkalottenartig gewölbte Ventilklappe (15).

3. Klappenventil nach Anspruch 1 oder 2, dadurch gekennzeichnet, dass der die Ventilöffnung (12) enthaltende Korpus und die Ventilklappe (15) getrennt voneinander hergestellte Bauteile sind.

## Claims

1. Non-return flap valve (1) with a body, which is produced by injection-moulding and serves as valve seat, with circularly cylindrical valve opening (12), particularly as component of a diaphragm pump (2), characterised by a spoke (13) diametrally bridging over the valve opening (12) and with a sprue mark (14) lying in its centre and a valve flap (15) with a central part curved away from the sprue mark (14) out of the plane of its rim to be laid sealingly over the edge of the opening (12).

2. Non return flap valve according to claim 1, characterised by a valve flap (15) curved in the manner of a spherical segment.

3. Non return flap valve according to claim 1 or 2, characterised thereby, that the body containing the valve opening (12) and the valve flap (15) are components produced separately one from the other.

## Revendications

1. Clapet anti-retour à battant (1) comportant un corps fabriqué par moulage par injection, servant de siège de clapet et muni d'une ouverture de clapet (12) en forme de cylindre circulaire, en particulier en tant que composant d'une pompe à membrane (2), caractérisé par le fait qu'il comporte un rayon (13) franchissant diamétralement l'ouverture de clapet (12), muni d'un téton en forme de carotte (14) situé en son centre et d'un battant de clapet (15) présentant une partie centrale bombée à l'opposé du téton (14) hors du plan de son bord destiné à s'appliquer de façon étanche par dessus le bord de l'ouverture (12).

2. Clapet à battant selon la revendication 1, caractérisé par le fait que son battant (15) est bombé en forme de calotte sphérique.

3. Clapet à battant selon l'une ou l'autre des revendications 1 ou 2, caractérisé par le fait que le corps contenant l'ouverture de clapet (12) et le battant de clapet (15) sont des éléments fabriqués séparément l'un de l'autre.

*Fig. 1*

Fig. 2